# EUROPEAN PATENT SPECIFICATION

(11) **EP 2 355 297 B1**
(45) Date of publication and mention of the grant of the patent: **03.04.2013**
(21) Application number: 10001247.5
(22) Date of filing: 06.02.2010
(51) Int. Cl.: H02J 7/00

(54) **Method for charging a battery, as well as a small, battery-operated electrical appliance and a charging circuit**
Verfahren zum Laden einer Batterie, sowie eine kleine, batteriebetriebene elektrische Anwendung und Ladeschaltung
Procédé de chargement d'une batterie, ainsi qu'un petit appareil électrique fonctionnant à batterie et circuit de chargement

(43) Date of publication of application: 10.08.2011
(73) Proprietor: Braun GmbH, 61476 Kronberg (DE)
(72) Inventor: Riemer, Jörn, 61381 Friedrichsdorf (DE); Fiolka, Sebastian, 60385 Frankfurt (DE); Hohmann, Thomas, 63571 Gelnhausen (DE); Hottenrott, Sebastian, 65510 Idstein (DE); Schädel, Tobias, 61350 Bad Homburg (DE); Stenglein, Christian, 60439 Frankfurt (DE)

(56) References cited:
- GB-A- 2 444 659
- US-A- 5 831 412
- US-A1- 2004 195 996
- US-A1- 2007 216 359

## Description

### FIELD OF THE INVENTION

The present invention relates to a method for charging a battery and also relates to a small, battery-operated electrical appliance and a charging circuit for charging the battery.

### BACKGROUND OF THE INVENTION

A plurality of small, battery-operated electrical appliances is already known, for example household appliances and appliances for personal use such as, for example, mixers, power drills, telephones, electric shavers or electric toothbrushes that can be operated on a power supply or whose batteries can be charged by a power supply. To charge the battery, the battery is connected to the AC voltage mains via a power supply. Each appliance typically has its own power supply that is adapted to the appliance's operating voltage and current consumption. This guarantees that, on the one hand, the appliance is fed with the correct voltage and, on the other hand, the power supply is not overloaded.

A method for charging a battery is known from US 2004/0195996 A1 or GB 2444659 A.

Known from WO 95/13643 A1 is an apparatus for identifying an external power adapter wherein the apparatus comprises: a resistor network that has a first resistor and a second resistor, wherein the first resistor is disposed within the external power adapter and operatively coupled to the second resistor, which is disposed within the device, wherein the resistor network generates a sense voltage associated with the external power adapter and a control circuit that is disposed within the device and which is adapted to receive the sense voltage in order to identify the external power adapter.

### SUMMARY OF THE INVENTION

The problem of the present invention is to provide for a method for charging a battery as well as a small, battery-operated electrical appliance and a charging circuit that makes it possible to use different power supplies to charge the battery.

This problem is solved by a method for charging a battery that has the following steps: determining the open circuit voltage of the power supply, assigning the determined open circuit voltage of the power supply to a pulse duty factor or modulation factor, and modulating the charging current provided by the power supply by this pulse duty factor. This method assumes that different power supplies differ in terms of their open circuit voltage and maximum output power, wherein power supplies with the same open circuit voltage also have the same maximum output power, so that the power supply's maximum output power can be determined by means of its open circuit voltage.

A small, battery-operated electrical appliance that can be operated with different power supplies has a charging circuit that is suitable for carrying out this method. The charging circuit has input connections to which the power supply can be connected, output connections that are connected to the battery, a controllable switch arranged between an input connection and an output connection to switch the electrical connection between the input connection and the output connection, a measurement device to measure the voltage between the input connections, and a control circuit that is connected to the measurement device and the switch to control the switch depending on the determined voltage, i.e. in order to modulate the charging current delivered by the power supply. The switch is, for example, a field effect transistor or a thyristor. Of course, instead of a switch also a controllable resistor can be used, for example a bipolar transistor or an IGBT, by means of which the amplitude of the charging current is modulated instead of being switched on and off.

The modulation factor or the pulse duty factor is determined by the ratio between the power supply's maximum allowable output power as identified by means of the open circuit voltage and the known power consumption of the appliance to be charged. The power consumption of the appliance or of the battery to be charged means the power the appliance typically consumes or the power with which the battery can be charged without being damaged in the process. To simplify matters, below only the terms "switch" and "pulse duty factor" are used; however, these terms should also be understood to comprise the variants "controllable resistor" and "modulation factor", respectively.

Preferably, the switch is alternately opened and closed; namely in a cycle whose pulse duty factor is determined by the charging circuit by means of the open circuit voltage of the power supply that is used. To that end, the voltage of the connected power supply is first measured with the switch being open (open circuit voltage) and, depending on the result a cycle with the desired pulse duty factor is chosen. This can be achieved by means of an electronic analog circuit that adjusts the pulse duty factor of a clock signal produced by a clock generator dependent on the measured open circuit voltage of the power supply. However, the charging circuit can also have a digital circuit with a storage unit in which the open circuit voltages and their respective, assigned cycles are stored, and the switch is then controlled using the respective cycle. By modulation of the charging current the power averaged over at least one pulse period and consumed by the small electrical appliance to be charged can be limited in such a way that it does not exceed the maximum allowable output power of the power supply that is used. In this way, a specific small electrical appliance can be charged with different power supplies; namely with power supplies that would normally be overloaded when this small electrical appliance is charged. For safety reasons, the charging circuit can be designed so that the power delivered by the power supply is always just lower than the maximum allowable output power of the power supply.

If the charging circuit is firmly installed in the small electrical appliance or the battery, then the charging circuit is preferably equipped so that a specific clock signal, whose pulse duty factor is adapted to the small electrical appliance or the battery, is directly assigned to the measured open circuit voltage of the power supply. Such a charging circuit is preferably intended for the case when the charging circuit is operated with a power supply whose output power is constant.

If the charging circuit is implemented as a separate module so that the charging circuit can be used for different appliances or batteries, then the charging circuit can be adjusted to the input power of the appliance to which it is connected. In this case, the control circuit has a storage unit in which the open circuit voltages and the maximum allowable output powers of a multitude of power supplies are stored. The maximum allowable output power of the power supply, which is identified by means of the open circuit voltage, is then set in relation to the adjusted power consumption of the appliance in order to assign a cycle with the required pulse duty factor, with which then the switch is controlled. Such a charging circuit is preferably intended for the case when the charging circuit is operated with a power supply whose output power is constant.

The device for measuring the open circuit voltage, the assignment of the modulation factor or the pulse duty factor to the measured open circuit voltage and the control of the controllable resistor or switch can be implemented by a microcontroller.

The method is preferably used for power supplies that deliver a direct current, but can also be used for power supplies that produce an alternating current, wherein then a rectifier is connected in series with the battery to charge it.

In another embodiment of the method and the charging circuit, the voltage is measured at least from time to time during charging, even when the switch is closed. This is advantageous if and when the charging circuit is fed by a power supply that delivers an essentially constant charging current. Because the voltage of the battery and thus the charging power increases in the course of the charging process, in this embodiment the control circuit can change the pulse duty factor as the battery is being charged in order to, on the one hand, charge the battery in the shortest possible time and, on the other hand, to prevent exceeding the power supply's maximum allowable output power. The pulse duty factor then can be in the range of 1 at the start and during charging until the maximum allowable charging power of the power supply is reached or is almost reached in order to then be reduced accordingly if the battery voltage increases.

In another embodiment of the method and the charging circuit, the charging current is measured, i.e. the charging circuit also has a device for measuring the charging current. This is advantageous if and when the charging circuit is fed by a power supply whose charging current depends on the charging voltage or battery voltage. Preferably, the charging current and also the battery voltage (when the switch is closed) are measured during charging; as a result, the control circuit can calculate the current charging power and adjust the pulse duty factor accordingly. This allows the battery to be charged in the shortest possible time without exceeding the power supply's maximum allowable charging power.

### BRIEF DESCRIPTION OF THE DRAWINGS

Further advantages, features and possibilities of application of the present invention are explained by way of the following exemplary embodiment that is shown in the figures.
- Figure 1: is a schematic representation of an electrical appliance that is connected to a power supply and that has a charging circuit;
- Figure 2: shows the temporal profile of the charging current delivered by the charging circuit.

### DETAILED DESCRIPTION OF THE INVENTION

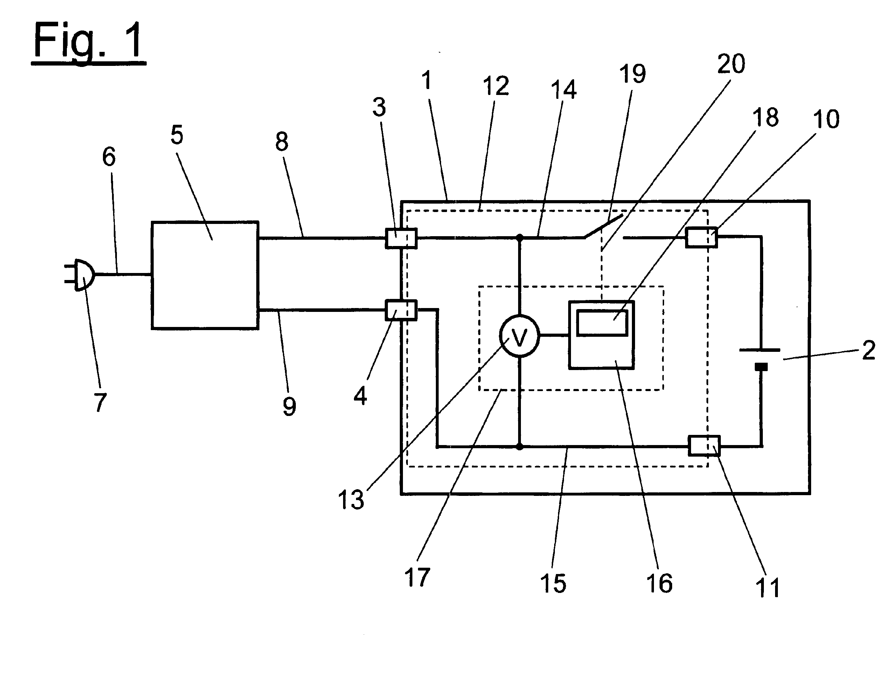

Figure 1 is a schematic representation of a small, battery-operated electrical appliance, for example an electric hand blender 1. The appliance 1 has a primary or a secondary battery 2. To charge the battery 2, the appliance 1 has two input connections 3, 4 that are connected to a power supply 5. The connection between the power supply 5 and the appliance 1 can be separated at the input connections 3, 4 so that the appliance 1 can also be operated without being plugged in. The power supply 5 can be connected to an alternating current network by means of a connecting line 6 and a plug 7. The power supply 5 provides a direct current on its output lines 8, 9 to charge the battery 2. This assumes that the maximum allowable output power can be determined by means of the open circuit voltage that is provided.

The input connections 3, 4 of the appliance 1 also form the input connections of the charging circuit 12 arranged in the appliance 1. The charging circuit 12 also has two output connections 10, 11 that in the embodiment shown are connected to the battery 2. The input connection 3 is connected to the output connection 10 via a line 14 and a switch 19, and the input connection 4 is connected to the output connection 11 via a line 15. The switch 19 is preferably an electronic switch, preferably a field effect transistor that can be controlled by a control circuit 16 via a connection 20. The charging circuit 12 also has a measuring device 13 for measuring the voltage between the input connections 3, 4. To that end, the measuring device 13 is connected to the lines 14, 15. The measuring device 13 provides the measured voltage to the control circuit 16, wherein the measurement device 13 and the control circuit 16 are implemented, for example, by a microcontroller 17. The microcontroller has a storage unit 18 in which each specific open circuit voltage is assigned to a specific pulse duty factor. The stored pulse duty factor is chosen so that when the battery 2 is charged or the appliance 1 is plugged in, the maximum output power of the power supply 5 cannot be exceeded.

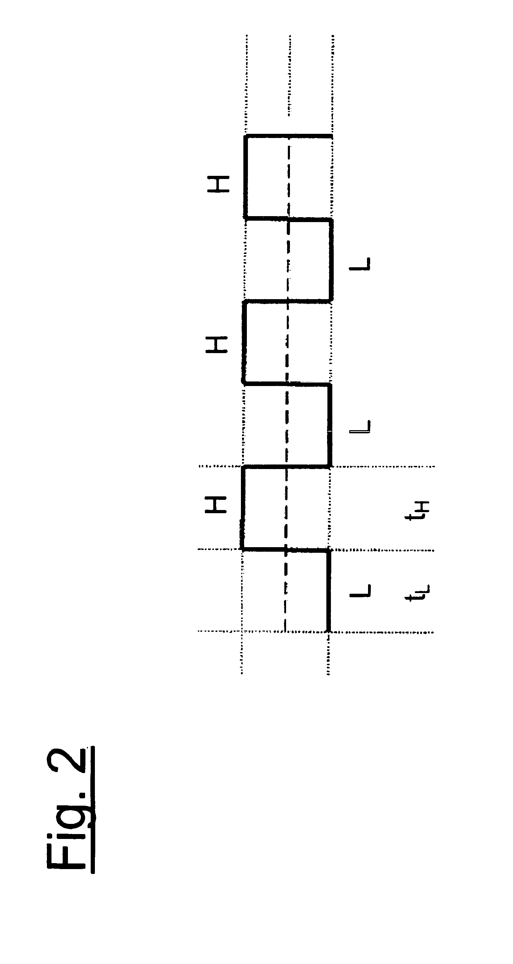

The functionality of the charging circuit 12 is described below.
The microcontroller 17 first opens the switch 19. Then, the microcontroller 17 determines by means of the measurement device 13, while the switch 19 is open, the voltage between the input connections 3, 4, i.e. the open circuit voltage of the power supply. The microcontroller 17 then chooses the value for the pulse duty factor that belongs to the measured open circuit voltage, with which it finally activates the switch 19; i.e., the switch 19 is alternately opened and closed so that a rectangular charging current is delivered to the battery 2, as is represented schematically in Figure 2.

The charging current according to Figure 2 has alternating time intervals **t**_{L} in which no current flows, and time intervals t_{H} in which current does flow. Figure 2 also represents in a schematic fashion by the dotted line the time-averaged output current.

The following example assumes that the battery 2 of the appliance 1 has a power consumption of 8 W during charging. If the switch mode power supply 5 that is used is a power supply with a maximum allowable output power of 4 W (perceptible at an open circuit voltage of, for example, 12V), the switch 19 must be opened half of the time in a period (**t**_{H} + **t**_{L}) and closed during the other half of the time. In that case, the average output power to the output connections 10, 11 is 4 W and does not exceed the maximum allowable output power of switch mode power supply 5. The charging time of the battery 2 is twice what it would be when a power supply with a maximum allowable output power of 8 W is used for charging. If, however, the switch mode power supply 5 is a power supply with a maximum allowable output power of 6 W (perceptible at an open circuit voltage of, for example, 13V), the switch 19 can remain closed for three-quarters of the length of the period, while it is opened for only one-quarter of the length of the period. The average output power would then be 6 W. If, however, a switch mode power supply with a maximum allowable output power of 8 W is used (perceptible at an open circuit voltage of, for example, 14V), which precisely corresponds to the power consumption of 8 W of the battery 2, the switch 19 can remain permanently closed without exceeding the maximum allowable output power of switch mode power supply 5.

In other words, the ratio between the period **t**_{H} of the interval with high voltage or power and the period **t**_{L} + **t**_{H} of the charging signal is equal to the ratio between the maximum allowable output power of the power supply 5 and the power consumption of the appliance 1 to be charged or the battery 2 when charging.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Method for charging a battery (2) using a power supply (5) with the steps:
determining the open circuit voltage of the power supply (5);
assigning the determined open circuit voltage of the power supply (5) to a pulse duty factor or modulation factor; and
modulating the charging current by this pulse duty factor or modulation factor.

2. Method according to Claim 1, **characterized in that** the modulation is a pulse width modulation or an amplitude modulation.

3. Method according to claim 1 or 2, **characterized in that** the charging voltage is also determined, and that the modulation, depending on the determined charging voltage, is adjusted so that the power delivered by the power supply (5) and averaged over at least one pulse period does not exceed the maximum allowable output power of the power supply (5).

4. Method according to claim 1 or 2, **characterized in that** the charging voltage and the charging current are also determined, and that the modulation, depending on the determined charging voltage and the determined charging current, is adjusted so that the average power delivered by the power supply (5) is equal to or just under the maximum allowable output power of the power supply (5).

5. Charging circuit (12) for a battery (2) having
two input connections (3, 4) that can be connected to a power supply (5),
two output connections (10, 11) that can be connected to a battery (2),
wherein a controllable switch (19) is arranged between an input connection (3) and an output connection (10),
a measurement device (13) for measuring the voltage between the input connections (3, 4), and
a control circuit (16) that is connected to the measurement device (13) and the switch (19) for controlling the switch (19), depending on the measured voltage,
**characterized in that** the control circuit (16) turns the switch (19) on and off by using a pulse duty factor that depends on the measured voltage.

6. Charging circuit (12) according to Claim 5, **characterized in that** the control circuit (16) assigns the voltage between the input connections (3, 4) as measured by the measurement device (13) when the switch (19) is opened to a specific pulse duty factor, with which it activates the switch (19).

7. Charging circuit (12) according to Claim 6, **characterized in that** the control circuit (16) has a storage unit (18) in which the pulse duty factors belonging to different input voltages are stored.

8. Charging circuit (12) according to Claim 7, **characterized in that** the control circuit (16) has a storage unit (18) for the open circuit voltages and the maximum allowable output powers of a multitude of power supplies.

9. Charging circuit (12) according to claim 7 or 8, **characterized in that** the control circuit (16) has a storage unit (18) for the power consumption of the appliance (1) to be charged.

10. Charging circuit (12) according to one of Claims 5 through 9, **characterized in that** the measurement device (13) and the control circuit (16) are implemented in a microcontroller (17).

11. Charging circuit (12) according to one of Claims 5 through 10, **characterized in that** it is installed in an electrically operated appliance (1), preferably a household appliance, wherein the output connections (10, 11) of the charging circuit (12) are connected to a battery (2) of the appliance (1).

12. Electrical appliance (1), for example a motor-driven household appliance, having a battery (2) and a charging circuit (12) according to one of Claims 5 through 11 that is equipped to carry out the method according to one of Claims 1 through 4.

## Patentansprüche

1. Verfahren zum Aufladen einer Batterie (2) mithilfe einer Leistungsversorgung (5), das die folgenden Schritte umfasst:
Bestimmen der Leerlaufspannung der Leistungsversorgung (5);
Zuordnen der bestimmten Leerlaufspannung der Leistungsversorgung (5) zu einem Tastverhältnis oder Modulationsgrad; und
Modulieren des Ladestroms mit diesem Tastverhältnis oder Modulationsgrad.

2. Verfahren nach Anspruch 1, **dadurch gekennzeichnet, dass** die Modulation eine Impulsbreitenmodulation oder eine Amplitudenmodulation ist.

3. Verfahren nach Anspruch 1 oder 2, **dadurch gekennzeichnet, dass** auch die Ladespannung bestimmt wird und dass die Modulation, abhängig von der bestimmten Ladespannung, so eingestellt wird, dass die Leistung, die von der Leistungsversorgung (5) geliefert und über mindestens eine Impulsperiode gemittelt wird, nicht die maximal zulässige Ausgabeleistung der Leistungsversorgung (5) übersteigt.

4. Verfahren nach Anspruch 1 oder 2, **dadurch gekennzeichnet, dass** die Ladespannung und der Ladestrom ebenfalls bestimmt werden und dass die Modulation, abhängig von der bestimmten Ladespannung und dem bestimmten Ladestrom, so eingestellt wird, dass die durchschnittliche Leistung, die von der Leistungsversorgung (5) geliefert wird, der maximal zulässigen Ausgabeleistung der Leistungsversorgung (5) gleich ist oder direkt darunter liegt.

5. Ladeschaltkreis (12) für eine Batterie (2), mit
zwei Eingangsverbindungen (3, 4), die mit einer Leistungsversorgung (5) verbunden werden können,
zwei Ausgangsverbindungen (10, 11), die mit einer Batterie (2) verbunden werden können,
wobei ein steuerbarer Schalter (19) zwischen einer Eingangsverbindung (3) und einer Ausgangsverbindung (10) angeordnet ist,
eine Messvorrichtung (13) zum Messen der Spannung zwischen den Eingangsverbindungen (3, 4) und
einen Steuerschaltkreis (16), der mit der Messvorrichtung (13) und dem Schalter (19) verbunden ist, zum Steuern des Schalters (19), abhängig von der gemessenen Spannung,
**dadurch gekennzeichnet, dass** der Steuerschaltkreis (16) den Schalter (19) mithilfe eines von der gemessenen Spannung abhängigen Tastverhältnisses ein- und ausschaltet.

6. Ladeschaltkreis (12) nach Anspruch 5, **dadurch gekennzeichnet, dass** der Steuerschaltkreis (16) die Spannung zwischen den Eingangsverbindungen (3, 4), wie von der Messvorrichtung (13) gemessen, zuordnet, wenn der Schalter (19) für ein bestimmtes Tastverhältnis geöffnet wird, mit dem er den Schalter (19) aktiviert.

7. Ladeschaltkreis (12) nach Anspruch 6, **dadurch gekennzeichnet, dass** der Steuerschaltkreis (16) eine Speichereinheit (18) aufweist, in der die zu unterschiedlichen Eingangsspannungen gehörenden Tastverhältnisse gespeichert werden.

8. Ladeschaltkreis (12) nach Anspruch 7, **dadurch gekennzeichnet, dass** der Steuerschaltkreis (16) eine Speichereinheit (18) für die Leerlaufspannungen und die maximal zulässigen Ausgangsleistungen mehrerer Leistungsversorgungen aufweist.

9. Ladeschaltkreis (12) nach Anspruch 7 oder 8, **dadurch gekennzeichnet, dass** der Steuerschaltkreis (16) eine Speichereinheit (18) für den Leistungsverbrauch des zu ladenden Geräts (1) aufweist.

10. Ladeschaltkreis (12) nach einem der Ansprüche 5 bis 9, **dadurch gekennzeichnet, dass** die Messvorrichtung (13) und der Steuerschaltkreis (16) in einem Microcontroller (17) implementiert sind.

11. Ladeschaltkreis (12) nach einem der Ansprüche 5 bis 10, **dadurch gekennzeichnet, dass** er in einem elektrisch betriebenen Gerät (1), vorzugsweise einem Haushaltsgerät, installiert ist, wobei die Ausgangsverbindungen (10, 11) des Ladeschaltkreises (12) mit einer Batterie (2) des Geräts (1) verbunden sind.

12. Elektrisches Gerät (1), zum Beispiel ein motorbetriebenes Haushaltsgerät, mit einer Batterie (2) und einem Ladeschaltkreis (12) nach einem der Ansprüche 5 bis 11, das so ausgestattet ist, dass es das Verfahren nach einem der Ansprüche 1 bis 4 durchführt.

## Revendications

1. Procédé pour charger une batterie (2) en utilisant une alimentation (5) avec les étapes consistant à :
déterminer la tension de circuit ouvert de l'alimentation (5) ;
affecter la tension de circuit ouvert déterminée de l'alimentation (5) à un facteur de durée ou facteur de modulation ; et
moduler le courant de charge par ce facteur de durée ou facteur de modulation.

2. Procédé selon la revendication 1, **caractérisé en ce que** la modulation est une modulation par impulsions de largeur variable ou une modulation d'amplitude.

3. Procédé selon la revendication 1 ou 2, **caractérisé en ce que** la tension de charge est également déterminée, et **en ce que** la modulation, en fonction de la tension de charge déterminée, est ajustée de sorte que la puissance libérée par l'alimentation (5) et dont on a établi la moyenne sur au moins une période d'impulsion ne dépasse pas la puissance maximale admissible de sortie de l'alimentation (5).

4. Procédé selon la revendication 1 ou 2, **caractérisé en ce que** la tension de charge et le courant de charge sont également déterminés, et **en ce que** la modulation, en fonction de la tension de charge déterminée et du courant de charge déterminé, est ajustée de sorte que la puissance moyenne libérée par l'alimentation (5) est égale ou juste en dessous de la puissance maximale admissible de sortie de l'alimentation (5).

5. Circuit de charge (12) pour une batterie (2) ayant
deux connexions d'entrée (3, 4) qui peuvent être connectées à une alimentation (5),
deux connexions de sortie (10, 11) qui peuvent être connectées à une batterie (2),
dans lequel un interrupteur réglable (19) est arrangé entre une connexion d'entrée (3) et une connexion de sortie (10),
un dispositif de mesure (13) pour mesurer la tension entre les connexions d'entrée (3, 4), et
un circuit de commande (16) qui est connecté au dispositif de mesure (13) et à l'interrupteur (19) pour commander l'interrupteur (19), en fonction de la tension mesurée,
**caractérisé en ce que** le circuit de commande (16) active et désactive l'interrupteur (19) en utilisant un facteur de durée qui dépend de la tension mesurée.

6. Circuit de charge (12) selon la revendication 5, **caractérisé en ce que** le circuit de commande (16) affecte la tension entre les connexions d'entrée (3, 4) telle que mesurée par le dispositif de mesure (13) lorsque l'interrupteur (19) est ouvert à un facteur de durée spécifique, avec lequel il active l'interrupteur (19).

7. Circuit de charge (12) selon la revendication 6, **caractérisé en ce que** le circuit de commande (16) a une unité de stockage (18) dans laquelle les facteurs de durée appartenant aux différentes tensions d'entrée sont stockés.

8. Circuit de charge (12) selon la revendication 7, **caractérisé en ce que** le circuit de commande (16) a une unité de stockage (18) pour les tensions de circuit ouvert et les puissances maximales admissibles de sortie d'une multitude d'alimentations.

9. Circuit de charge (12) selon la revendication 7 ou 8, **caractérisé en ce que** le circuit de commande (16) a une unité de stockage (18) pour la consommation électrique de l'appareil (1) à charger.

10. Circuit de charge (12) selon l'une des revendications 5 à 9, **caractérisé en ce que** le dispositif de mesure (13) et le circuit de commande (16) sont mis en oeuvre dans un micro-contrôleur (17).

11. Circuit de charge (12) selon l'une des revendications 5 à 10, **caractérisé en ce qu'**il est installé dans un appareil à commande électrique (1), de préférence un appareil ménager, dans lequel les connexions de sortie (10, 11) du circuit de charge (12) sont connectées à une batterie (2) de l'appareil (1).

12. Appareil électrique (1), par exemple un appareil ménager à moteur, ayant une batterie (2) et un circuit de charge (12) selon l'une des revendications 5 à 11 qui est équipé pour effectuer le procédé selon l'une des revendications 1 à 4.
